# EUROPÄISCHE PATENTSCHRIFT

(11) **EP 0 513 079 B1**
(45) Veröffentlichungstag und Bekanntmachung des Hinweises auf die Patenterteilung: **08.12.1993**
(21) Anmeldenummer: 91903024.7
(22) Anmeldetag: 22.01.1991
(51) Int. Cl.: B65G 47/90, B65B 21/18

(54) **GREIFTULPE FÜR FLASCHEN ODER DGL.**
GRIPPING CAP FOR BOTTLES OR THE LIKE
TULIPE DE PREHENSION POUR BOUTEILLES OU ANALOGUE

(30) Priorität: 26.01.1990 DE 9000849 U; 07.03.1990 DE 9002618 U
(43) Veröffentlichungstag der Anmeldung: 19.11.1992
(73) Patentinhaber: Kronseder, Hermann, D-93086 Wörth (DE)
(72) Erfinder: Kronseder, Hermann, D-93086 Wörth (DE)
(74) Vertreter: Grünecker, Kinkeldey, Stockmair & Schwanhäusser Anwaltssozietät
(86) Internationale Anmeldenummer: EP9100117
(87) Internationale Veröffentlichungsnummer: WO9111378

(56) Entgegenhaltungen:
- DE-A- 1 586 012
- DE-A- 3 819 498
- DE-B- 2 346 430

## Beschreibung

Die Neuerung betrifft eine Greiftulpe für Flaschen oder dgl., mit einem buchsenartigen Gehäuse, das an einer Seite eine Aufnahmeöffnung für eine Flasche oder dgl. aufweist, an die sich eine nach innen hin konisch erweiternde Steuerfläche anschließt, mit einem an der anderen Seite axial beweglich im Gehäuse angeordneten Stellelement und mit einer von diesem beaufschlagten, axial beweglich im Gehäuse geführten Spannzange, deren durch Schlitze voneinander getrennte elastische Greiferfinger bei einer axialen Relativbewegung zwischen Spannzange und Gehäuse durch die Steuerfläche in radialer Richtung bewegbar sind und dabei die Flaschen oder dgl. von außen erfassen oder freigeben.

Es ist bereits eine derartige Greiftulpe bekannt, bei der sich die Greiferfinger der einstückig mit dem kolbenförmigen Stellelement ausgebildeten Spannzange mit ihren freien Enden ausschließlich an der konischen Steuerfläche abstützen und zwar sowohl bei geöffneter als auch bei geschlossener Spannzange (DE-OS 1 586 012). Eine weitere Führung für die Greiferfinger ist nicht vorhanden. Diese bekannte Greiftulpe ist für die verschiedensten Flaschen und Gefäße einsetzbar und erfordert nur geringe Stellkräfte. Ungünstig ist jedoch die unkontrollierte Verformung der Greiferfinger und deren starke Biegebelastung, insbesondere an der Übergangsstelle zum Stellelement. Da die Spannzange außerdem aus relativ biegesteifem Material bestehen muß, brechen die Greiferfinger häufig schon nach kurzer Gebrauchsdauer ab. Für die Abdichtung des Stellelements gegenüber der Innenseite des als Zylinder wirkenden Gehäuses ist ein separater Dichtring vorgesehen, der in einer Ringnut des Stellelements sitzt.

Weiter ist bereits eine Greiftulpe einer anderen Gattung bekannt, bei der in einem buchsenartigen Gehäuse eine Spannhülse sitzt, die sich mit einem Ende im Bereich der Aufnahmeöffnung an einem Bund des Gehäuses und mit ihrem anderen Ende an einem axial verschiebbar im Gehäuse geführten Stellkolben abstützt (DE-OS 38 19 598). Die Hülse ist leicht nach innen gewölbt und mit Öffnungen versehen, so daß sich bei einer axialen Kompression durch den Stellkolben ihr Innendurchmesser verringert. Diese bekannte Greiftulpe ist nur für bestimmte Flaschen- und Gefäßformen einsetzbar und erfordert relativ hohe Stellkräfte. Da die Spannhülse gleichzeitig die Rückstellkraft zu erzeugen hat, muß sie aus relativ biegesteifem Material gefertigt werden. Die Gebrauchsdauer ist daher begrenzt. Bei einer Erschlaffung der Spannhülse können die Flaschen unkontrolliert in der Greiftulpe hängen bleiben.

Der Neuerung liegt die Aufgabe zugrunde, bei einer gattungsgemäßen Greiftulpe der eingangs genannten Art mit einfachen Mitteln die Standzeit der Spannzange spürbar zu erhöhen.

Diese Aufgabe wird neuerungsgemäß dadurch gelöst, daß innerhalb der Spannzange eine feststehende Führungsfläche für die Spannzange bzw. deren Greiferfinger angeordnet ist, so daß die Spannzange bzw. deren Greiffinger sowohl an ihrer Außenseite als auch an ihrer Innenseite gleitend geführt ist bzw. sind.

Dadurch, daß die Spannzange bzw. deren Greiferfinger nicht nur an ihrer Außenseite, sondern zusätzlich auch an ihrer Innenseite durch die zusammen mit dem Gehäuse feststehende, auf der Spannzange erforderlichenfalls gleitende Führungsfläche exakt geführt werden, ist eine definierte Verformung bei der Bewegung zwischen der geöffneten und der geschlossenen Stellung erzielbar, ohne daß es zu einem unkontrollierten Verbiegen oder Ausknicken der Greiferfinger kommt. Aufgrund der exakten Führung kann außerdem ein wesentlich weicheres Material verwendet werden.

Dies alles führt zu einer erheblichen Verlängerung der Gebrauchsdauer einer neuerungsgemäßen Greiftulpe.

Für die Ausbildung der inneren Führungsfläche sowie der am Gehäuse ausgebildeten äußeren Führungsfläche für die Spannzange und deren Greiferfinger gibt es verschiedene Möglichkeiten. Einige besonders vorteilhafte hiervon sind in den Ansprüchen 2 bis 6 angegeben. Hierdurch wird eine exakte, allseitige Führung erreicht, so daß beim Übergang in die Schließstellung nur noch die Endbereiche der Greiferfinger durch die Steuerfläche abgebogen werden. Der übrige, zwischen der inneren und der äußeren Führungsfläche aufgenommene Teil der Spannzange kann seine zylindrische Form beibehalten und hat lediglich noch die Aufgabe, nach Art einer Schiebehülse die Bewegung auf die Enden der Greiferfinger zu übertragen. In diesem Zusammenhang ist es zweckmäßig, gemäß Anspruch 7 die Steuerfläche konkav abzurunden, wodurch eine nahezu ausschließlich in radialer Richtung verlaufende Bewegung der Greiferfingerenden bewirkt werden kann, insbesondere, wenn diese entsprechend konvex gerundet sind.

Auch für die Halterung der inneren Führungsfläche für die Spannzange gibt es verschiedene Möglichkeiten. Einige besonders vorteilhafte hiervon sind in den Ansprüchen 8 bis 14 angegeben. Hierdurch wird eine besonders starre Fixierung der Führungsfläche sowie eine kompakte, kostengünstige Bauweise erzielt. Außerdem wird die Möglichkeit einer zusätzlichen Fixierung bzw. Zentrierung des Flaschenkopfs sowie eines Schutzes gegen verschleißfördernde Berührungen zwischen dem Flaschenkopf und der Spannzange geschaffen.

Die starre Brücke im Inneren der Spannzange kann außerdem als Widerlager für eine die Spannzange in die Öffnungsstellung bewegende Druckfeder dienen, wie in den Ansprüchen 15 und 19 angegeben ist. Hierdurch wird eine kompakte, geschlossene Bauweise ermöglicht und die Spannzange selbst muß keinerlei Rückstellkräfte aufbringen.

Die Spannzange kann als vom kolbenartigen Stellelement getrenntes, lösbar mit diesem verbundenes eigenes Bauelement mit einem bodenartigen Verbindungsteil ausgebildet sein, wie in den Ansprüchen 16 bis 18 ausgeführt ist.

Die bei einer neuerungsgemäßen Greiftulpe mögliche Herstellung der Spannzange aus weichelastischem Kunststoff mit guten Gleiteigenschaften ermöglicht jedoch auch eine besonders vorteilhafte einstückige Gestaltung der Spannzange, des kolbenförmigen Stellelements und dessen Dichtelement, wie sie in den Unteransprüchen 19 bis 25 angegeben ist. Die aus Spannzange, Kolben und Dichtung gebildete, einstückige Baueinheit ermöglicht äußerst günstige Herstellungskosten und einen einfachen, raschen Austausch einer Spannzange falls erforderlich. Durch die einstückige Gestaltung ist automatisch sichergestellt, daß die beiden eventuellen Verschleißteile, nämlich Spannzange und Dichtlippe, immer zusammen erneuert werden.

Im Nachstehenden wird ein Ausführungsbeispiel der Neuerung anhand der Zeichnung beschrieben. Es zeigen:
- Fig. 1: einen senkrechten Schnitt durch eine Greiftulpe, wobei auf der linken Seite die geschlossene und auf der rechten Seite die geöffnete Stellung gezeigt ist
- Fig. 2: den horizontalen Schnitt A B nach Fig. 1
- Fig. 3: einen senkrechten Schnitt durch eine andere Ausführung einer Spannzange.

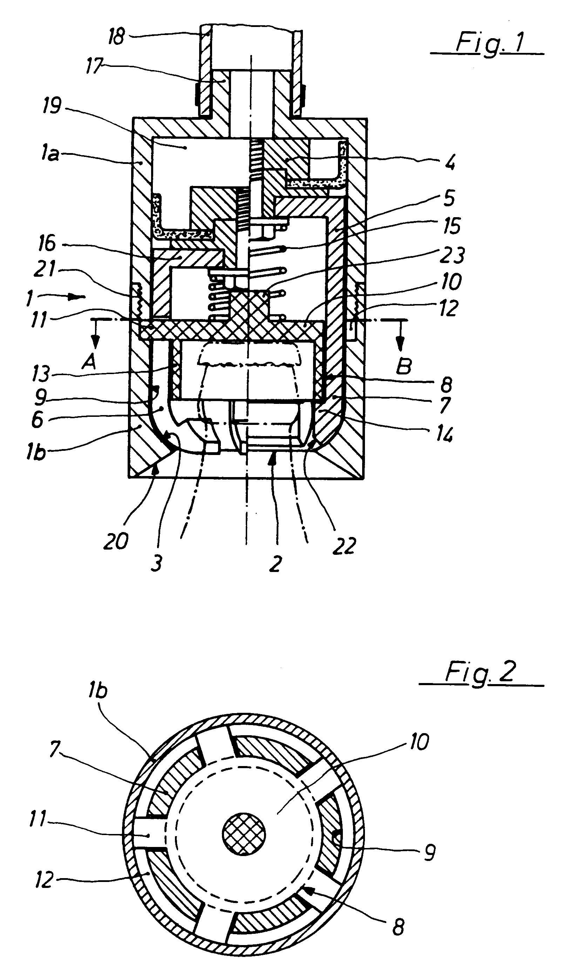

Die Greiftulpe nach Fig. 1 und 2 weist ein rotationssymmetrisches, buchsenartiges Gehäuse 1 aus hartem Kunststoff mit guten Gleiteigenschaften auf. Das in der gezeigten senkrechten Gebrauchslage obere Ende des Gehäuses 1 ist durch einen angeformten Deckel abgeschlossen. In diesem ist ein zentraler, durchbohrter Anschlußzapfen 17 ausgebildet, an dem ein flexibler Schlauch 18 oder ein Rohr befestigt ist. Dieser dient einerseits der Halterung der Greiftulpe im Greiferkopf einer nicht weiter gezeigten Flaschenein- oder -auspackmaschine und andererseits zur Druckluftzufuhr zu einem am oberen Ende des Gehäuses 1 ausgebildeten Zylinderraum 19. In diesem ist ein abgedichtetes, kolbenförmiges Stellelement 4 axial beweglich angeordnet.

An dem in der gezeigten senkrechten Gebrauchslage unteren Ende der Greiftulpe ist eine kreisförmige Aufnahmeöffnung 2 angeordnet, deren Durchmesser etwas größer ist als der Kopfdurchmesser einer zu erfassenden Flasche (strichpunktiert angedeutet). An die Aufnahmeöffnung 2 schließt sich nach unten hin eine sich konisch erweiternde Zentrierfläche 20 für den Flaschenkopf an. Nach oben hin schließt sich an die Aufnahmeöffnung 2 eine sich gleichfalls in etwa konisch erweiternde Steuerfläche 3 an, die hohlkehlenartig ausgerundet ist. Die untere Endtangente der Steuerfläche 3 verläuft unter einem spitzen Winkel zur Horizontalen. Die obere Endtangente der Steuerfläche 3 verläuft senkrecht und diese geht nahtlos in die zylindrische Innenfläche 9 des Gehäuses 1 über. Die Aufnahmeöffnung 2, die Zentrierfläche 20, die Steuerfläche 3 und die Innenfläche 9 sind konzentrisch zur Mittelachse des Gehäuses 1 angeordnet.

Im Inneren des Gehäuses 1 ist eine sich vom Stellelement 4 im wesentlichen bis zur Austrittsöffnung 2 erstreckende, hülsenartige Spannzange 5 aus biegeweichem Kunststoff axial verschieblich angeordnet. An ihrem oberen Ende weist die Spannzange 5 einen einstückig angeformten horizontalen Boden 16 auf, mit dem sie sich großflächig am kolbenartigen Stellelement 4 abstützt. Mittels einer zentralen, den Boden 16 durchdringenden Schraube ist die Spannzange 5 lösbar mit dem Stellelement 4 verbunden .

Der Außenmantel der Spannzange 5 ist nahezu über die gesamte Länge zylindrisch und verschiebbar an der Innenfläche 9 des Gehäuses 1 geführt. Lediglich im unteren Endbereich ist der Außenmantel der Spannzange 5 entsprechend der Steuerfläche 3 konvex abgerundet und endet - bei geöffneter Spannzange - an der Aufnahmeöffnung 2. Der Innenmantel der Spannzange 5 ist gleichfalls weitgehend zylindrisch und weist in seinem unteren Endbereich eine abgesetzte Verdickung 14 auf, die - bei geöffneter Spannzange - innen teilzylindrisch verläuft und mit der Aufnahmeöffnung 2 fluchtet. Die Spannzange 5 weist mehrere gleichmäßig über den Umfang verteilte, in axialer Richtung verlaufende und am unteren Ende offene Schlitze 6 auf, wodurch mehrere einzeln bewegliche Greiferfinger 7 gebildet werden. Die Schlitze 6 enden mit einem gewissen Abstand vom Boden 16 der Spannzange 5, so daß deren oberer Bereich durchgehend zylindrisch ist.

Innerhalb der Spannzange 5 sitzt in etwa im mittleren Bereich in horizontaler Lage eine scheibenartige Brücke 10. Diese weist an ihrem Umfang mehrere radial verlaufende Stege 11 auf, die mit Spiel durch die Schlitze 6 hindurch in eine an der Innenseite des Gehäuses 1 ausgebildete ringförmige Ausnehmung 12 satt eingreifen. Auf diese Weise ist die Brücke 10 starr im Gehäuse 1 fixiert und macht die Axialbewegung der Spannzange 5 nicht mit.

Das Gehäuse 1 ist auf Höhe der Ausnehmung 12 in einer horizontalen Ebene geteilt, derart, daß die obere Begrenzung der Ausnehmung 12 im oberen Gehäuseteil 1a und die untere Begrenzung im unteren Gehäuseteil 1b sitzt. Die beiden Gehäuseteile sind durch ein Gewinde 21 lösbar miteinander verschraubt. Nach einem Abschrauben des unteren Gehäuseteils 1b können somit die Brücke 10, die Spannzange 5 und das Stellelement 4 einzeln oder zusammen aus dem oberen Gehäuseteil 1a herausgezogen werden. Umgekehrt kann bei der Montage der Greiftulpe bei abgeschraubtem unteren Gehäuseteil 1b das Stellelement 4 und die Spannzange 5 in das obere Gehäuseteil 1a eingeschoben werden. Danach wird die Brücke 10 gegen den unteren Rand des oberen Gehäuseteils (1a) gelegt und in dieser Lage abschließend durch Aufschrauben des unteren Gehäuseteils 1b fixiert. Die Brücke 10 hält dann alle Teile unverlierbar zu einer Baueinheit zusammen.

An der Unterseite der Brücke 10, die zur Aufnahmeöffnung 2 weist, ist konzentrisch zu dieser ein ringförmiger, zylindrischer Ansatz 13 ausgebildet. Dessen zylindrische Innenseite stimmt im Durchmesser mit der Aufnahmeöffnung 2 überein und bildet eine Aufnahme für den Kopf einer zu ergreifenden Flasche. Dabei wirkt die horizontale Unterseite der Brücke 10 als Anschlag für die Oberseite des Flaschenkopfs und sichert so die exakte Einhaltung der gewünschten Relativposition zwischen Flasche und Greiftulpe. Die zylindrische Außenseite des Ansatzes 13 ist als Führungsfläche 8 für die Spannzange 5 bzw. deren Greiferfinger 7 ausgebildet. Sie formt zusammen mit der zylindrischen Innenfläche 9 des Gehäuses 1 einen ringförmigen Führungskanal, der die Spannzange 5 eng aber mit ausreichendem Bewegungsspiel umfaßt. Im Bereich dieses Führungskanals kann die Spannzange 5 nur auf Zug oder Schub, nicht dagegen auf Biegung oder Knickung beansprucht werden.

Die Führungsfläche 8 reicht mit ihrem unteren Ende bis zur glatten Übergangsstelle zwischen der Innenfläche 9 und der Steuerfläche 3. Die kurzen Endbereiche der Greiferfinger 7 können sich daher unter dem Einfluß der Steuerfläche 3 ungehindert verformen.

Auf der Oberseite der Brücke 10 stützt sich eine Druckfeder 15 ab, deren oberes Ende am Boden 16 der Spannzange 5 bzw. am Stellelement 4 angreift und dieses nach oben zu drücken sucht. Die oberste Endstellung wird durch eine am Stellelement 4 ausgebildete Anschlagfläche definiert, die sich an die Unterseite des oberen Deckels des Gehäuses 1 anlegt. In dieser Position, die in Figur 1 auf der rechten Seite dargestellt ist, ist die Spannzange 5 geöffnet; ihre Greiferfinger 7 sind eingezogen. Dabei fluchten die innere Zylinderfläche des Ansatzes 13 und die innere Zylinderfläche der Verdickungen 14 mit der Aufnahmeöffnung 2. Der Kopf einer zu ergreifenden Flasche kann so ungehindert in die Greiftulpe eindringen, wobei die funktionswichtigen Elemente, insbesondere die durch eine Abschrägung 22 an der Greiferfingerspitze gebildete Greiffläche, gegen Beschädigungen, z.B. durch den Flaschenverschluß, gut geschützt sind. In der geöffneten Stellung folgt die Spannzange 5 mit ihrer gesamten Außenfläche der Innenfläche 9 des Gehäuses 1 sowie der abgerundeten Steuerfläche 3 und unterliegt keiner Beanspruchung.

Wird durch den Schlauch 18 dem Zylinderraum 19 Druckluft mit ausreichendem Druck zugeführt, so bewegt sich das Stellelement 4 zusammen mit der Spannzange 5 entgegen der Kraft der Druckfeder 15 nach unten in Richtung Aufnahmeöffnung 2. Ist keine Flasche vorhanden, so wird die Bewegung durch einen an der Oberseite der Brücke 10 ausgebildeten Nocken 23 gestoppt, auf den der Kopf der Schraube, der die Spannzange 5 mit dem Stellelement 4 verbindet, auftrifft. Der Nocken 23 legt somit die maximale Schließbewegung der Spannzange 5 und damit den geringsten gegenseitigen Abstand der Enden der Greiferfinger 7 in der Schließstellung fest. Diese ist so definiert, daß keine ungünstigen Belastungen in den Greiferfingern auftreten. Beim Übergang in die Schließstellung unter dem Einfluß des Stellelements 4 werden die über die innere Führungsfläche 8 überstehenden Enden der Greiferfinger 9 an der Steuerfläche 3 verformt, derart, daß sie eine im wesentlichen radial zur Mittelachse der Greiftulpe hin gerichtete Schubbewegung ausführen. Dabei gleitet der entsprechend abgerundete äußere Endbereich der Greiferfinger 7 entlang der Steuerfläche. Die Verformung ist somit auf die Endbereiche der Greiferfinger 7 beschränkt. Die Greifbewegung wird fortgesetzt, bis die Greiferfingerenden mit ihren Abschrägungen 22 auf die Flasche treffen und diese fest zwischen sich einklemmen. Infolge der überwiegend radial verlaufenden Greifbewegung der Greiferfinger können nahezu alle üblichen Flaschen und Gefäße, auch solche mit stark verdicktem Kopfbereich, problemlos und sicher ergriffen werden.

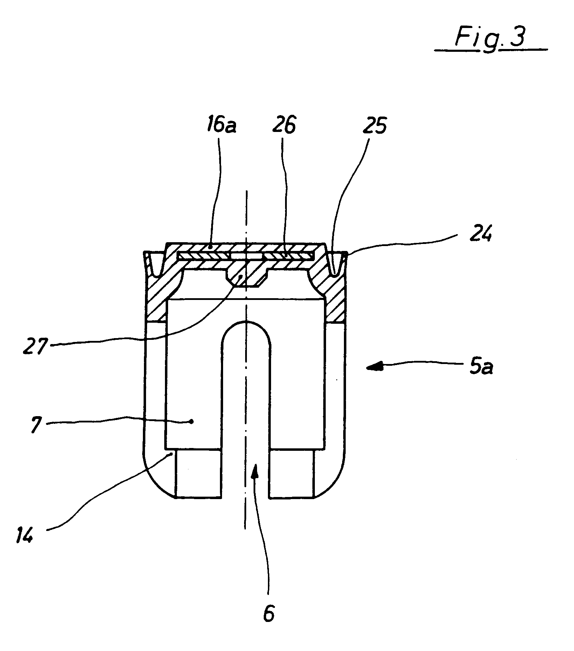

Die Spannzange 5a nach Fig. 3 besteht wie die Spannzange 5 nach Fig. 1 und 2 aus weichelastischem Kunststoff wie z.B. gespritztem Polyurethan und ist zum Einbau in das in Fig. 1 und 2 gezeigte Gehäuse 1 bestimmt. Sie ist auch einstückig mit einem Boden 16a ausgebildet, der hier jedoch als durchgehender Kolben für den Zylinderraum 19 ausgebildet ist. In den Boden ist zur Verstärkung eine kreisrunde Metallscheibe 26 vollständig eingebettet. An der Unterseite des Bodens 16a, die zu den Greiferfingern 7 weist, ist ein kreisrunder, vorstehender Zentrieransatz 27 ausgebildet, der nach dem Einbau in das Gehäuse 1 die Druckfeder 15 zentriert. Diese stützt sich somit direkt auf dem Boden 16a bzw. dem Kolben ab. Außerdem wirkt der Zentrieransatz 27 mit dem an der Oberseite der Brücke 10 ausgebildeten Nocken 23 zusammen und definiert so die unterste Endstellung der Spannzange 5a.

Die Spannzange 5a nach Fig. 3 ist gleichmäßig über den Umfang verteilt mit vier axial verlaufenden, randoffenen Schlitzen 6 versehen. Sie benötigt daher eine Brücke 10, die dementsprechend am Umfang mit vier radialen Stegen 11 versehen ist.

Am oberen Rand der Spannzange 5a bzw. am seitlichen Rand des Bodens 16a ist zur Abdichtung des Kolbenraums 19 eine rotationssymmetrische Dichtlippe 24 einstückig mit der Spannzange 5a bzw. dem Boden 16 angeformt. Wie die Figur 3 zeigt, ragt die Dichtlippe 24 im entspannten Zustand bei ausgebauter Spannzange 5a gegenüber deren zylindrischen Außenfläche leicht schräg nach außen vor, so daß sie nach dem Einbau in das Gehäuse 1 mit der gewünschten Vorspannung an der zylindrischen Innenwand 9 anliegt. An die Dichtlippe 24 schließt sich zu deren Zentrum hin eine in axialer Richtung nach oben hin offene Ringnut 25 an. Diese sorgt zum einen für die gewünschte Elastizität der Dichtlippe 24 und ermöglicht zum anderen, daß das in den Zylinderraum 19 eingeleitete Druckmedium die Dichtlippe 24 von innen beaufschlagt und verstärkt an die Fläche 9 andrückt.

Die von den Greiferfingern 7 wegweisende, abgesehen von der Ringnut 25 ebene Stirnseite des Bodens 16a wirkt nach Art eines Anschlags mit dem am oberen Ende des Gehäuses 1 angeformten Deckel zusammen und definiert so die obere bzw. Öffnungsstellung der Spannzange 5a. Damit in dieser Position die Dichtlippe 24 den Deckel nicht berührt, endet deren oberes, freies Ende mit einem geringen Abstand zur Ebene der besagten Stirnfläche des Bodens 16a.

Die vorbeschriebene Spannzange 5a übernimmt alle Funktionen, die bei der Spannzange 5 nach Fig. 1 und 2 durch die Spannzange selbst, den Kolben 4 und dessen Dichtring wahrgenommen wird.

## Patentansprüche

1. Greiftulpe für Flaschen oder dgl., mit einem buchsenartigen Gehäuse, das an einer Seite eine Aufnahmeöffnung für eine Flasche oder dgl. aufweist, an die sich eine nach innen hin konisch erweiternde Steuerfläche anschließt, mit einem an der anderen Seite axial beweglich im Gehäuse angeordneten Stellelement und mit einer von diesem beaufschlagten, axial beweglich im Gehäuse geführten Spannzange, deren durch Schlitze voneinander getrennte elastische Greiferfinger bei einer axialen Relativbewegung zwischen Spannzange und Gehäuse durch die Steuerfläche in radialer Richtung bewegbar sind und dabei die Flaschen oder dgl. von außen erfassen oder freigeben, dadurch gekennzeichnet, daß innerhalb der Spannzange (5, 5a) eine feststehende Führungsfläche (8) für die Spannzange (5, 5a) bzw. deren Greiferfinger (7) angeordnet ist, so daß die Spannzange bzw. deren Greiferfinger sowohl an ihrer Außenseite als auch an ihrer Innenseite gleitend geführt ist bzw. sind.

2. Greiftulpe nach Anspruch 1, dadurch gekennzeichnet, daß die Führungsfläche (8) rotationssymmetrisch ausgebildet und konzentrisch zum Gehäuse (1) und zur Spannzange (5, 5a) angeordnet ist.

3. Greiftulpe nach Anspruch 2, dadurch gekennzeichnet, daß die Führungsfläche (8) zylindrisch ausgebildet ist.

4. Greiftulpe nach Anspruch 3, dadurch gekennzeichnet, daß die der Führungsfläche (8) gegenüberliegende Innenfläche (9) des Gehäuses (1) zylindrisch ausgebildet und konzentrisch zur Führungsfläche (8) angeordnet ist.

5. Greiftulpe nach Anspruch 4, dadurch gekennzeichnet, daß die Spannzange (5, 5a) einen zylindrischen Mittelbereich aufweist, der gleitbar zwischen der Führungsfläche (8) und der Innenfläche (9) des Gehäuses (1) aufgenommen ist.

6. Greiftulpe nach einem der Ansprüche 1 bis 5, dadurch gekennzeichnet, daß sich die Führungsfläche (8) bis zum gehäuseinneren Endbereich der Steuerfläche (3) erstreckt.

7. Greiftulpe nach einem der Ansprüche 1 bis 6, dadurch gekennzeichnet, daß die Steuerfläche (3) konkav ausgerundet ist und die Enden der Greiferfinger (7) entsprechend konvex gewölbt sind.

8. Greiftulpe nach einem der Ansprüche 1 bis 7, dadurch gekennzeichnet, daß die Führungsfläche (8) an einer zwischen dem Stellelement (4) und der Aufnahmeöffnung (2) im Gehäuse (1) befestigten Brücke (10) angeordnet ist.

9. Greiftulpe nach Anspruch 8, dadurch gekennzeichnet, daß die Brücke (10) mit mehreren radial ausgerichteten Stegen (11) versehen ist, die durch axial verlaufende Öffnungen (6) in der Spannzange (5, 5a) hindurch in eine Ausnehmung (12) des Gehäuses (1) eingreifen.

10. Greiftulpe nach Anspruch 9, dadurch gekennzeichnet, daß die Öfnungen durch die randoffenen Schlitze (6) zwischen den Greiferfingern (7) gebildet werden.

11. Greiftulpe nach Anspruch 9 oder 10, dadurch gekennzeichnet, daß das Gehäuse (1) im Bereich der Ausnehmung (12) in einer senkrecht zur Mittelachse liegenden Ebene geteilt ist und die beiden Gehäuseteile (1a, 1b) lösbar miteinander verbunden sind.

12. Greiftulpe nach einem der Ansprüche 8 bis 11, dadurch gekennzeichnet, daß die Brücke (10) an der zur Aufnahmeöffnung (2) weisenden Seite einen ringförmigen Ansatz (13) aufweist, dessen Inneres als Aufnahme für einen Flaschenkopf ausgebildet ist.

13. Greiftulpe nach Anspruch 12, dadurch gekennzeichnet, daß der Durchmesser der Aufnahme in etwa dem Durchmesser der Aufnahmeöffnung (2) entspricht und konzentrisch zu dieser liegt.

14. Greiftulpe nach Anspruch 12 oder 13, dadurch gekennzeichnet, daß die Greiferfinger (7) an der Innenseite ihrer freien Enden mit einer abgesetzten Verdickung (14) versehen sind und daß die Verdickungen bei geöffneter Spannzange (5) eine Zylinderfläche bilden, die vorzugsweise mit der Aufnahme im Ansatz (13) fluchtet.

15. Greiftulpe nach einem der Ansprüche 8 bis 14, dadurch gekennzeichnet, daß zwischen die von der Aufnahmeöffnung (2) wegweisende Seite der Brücke (10) und die benachbarte Seite des kolbenartigen Stellelements (4) eine Druckfeder (15) eingesetzt ist.

16. Greiftulpe nach einem der Ansprüche 1 bis 15, dadurch gekennzeichnet, daß die Spannzange (5, 5a) an ihrer dem Stellelement (4) benachbarten Stirnseite mit einem Boden (16, 16a) versehen ist.

17. Greiftulpe nach Anspruch 16, dadurch gekennzeichnet, daß die Spannzange (5, 5a) und ihr Boden (16, 16a) einstückig ausgebildet sind.

18. Greiftulpe nach Anspruch 16 oder 17, dadurch gekennzeichnet, daß die Spannzange (5) im Bereich des Bodens (16) lösbar mit dem Stellelement (4) verbunden ist.

19. Greiftulpe nach Anspruch 17, dadurch gekennzeichnet, daß das kolbenartige Stellelement unmittelbar durch den Boden (16a) der Spannzange (5a) gebildet wird und daß an die Spannzange (5a) und/oder den Boden (16a) eine rotationssymmetrische, elastische Dichtlippe (24) angeformt ist, die mit Vorspannung an der zylindrischen Innenfläche (9) des Gehäuses (1) anliegt.

20. Greiftulpe nach Anspruch 19, dadurch gekennzeichnet, daß die Dichtlippe (24) mit ihrem freien Ende zu der von den Greiferfingern (7) wegweisenden Seite der Spannzange (5a) weist.

21. Greiftulpe nach Anspruch 20, dadurch gekennzeichnet, daß sich an die Dichtlippe (24) zur Mitte hin eine in den Boden (16a) eingearbeitete, in axialer Richtung offene Ringnut (25) anschließt.

22. Greiftulpe nach Einspruch 21, dadurch gekennzeichnet, daß sich die Dichtlippe (24) bis zur Ebene der von den Greiferfingern (7) abgewandten Stirnfläche des Bodens (16a) erstreckt oder kurz vor diesem endet.

23. Greiftulpe nach einem der Ansprüche 16 bis 22, dadurch gekennzeichnet, daß in den Boden (16a) eine metallische Verstärkungsplatte (26) eingebettet ist.

24. Greiftulpe nach einem der Ansprüche 16 bis 23, dadurch gekennzeichnet, daß an der den Greiferfingern (7) zugewandten Seite des Bodens (16a) ein Zentrieransatz (27) für eine am Boden (16a) angreifende Druckfeder (15) ausgebildet ist.

25. Greiftulpe nach einem der Ansprüche 1 bis 24, dadurch gekennzeichnet, daß die Spannzange (5, 5a) und gegebenenfalls ihr Boden (16, 16a) aus einem weichelastischen oder biegeweichen Kunststoff bestehen.

## Claims

1. Bell gripper for bottles or the like, with a bush-like housing comprising on one side a receiving opening for a bottle or the like, which is adjoined by an inwardly conically diverging control surface, with a controlling element arranged axially movably in the housing on the other side and with a chuck which is acted upon by the controlling element and guided axially movably in the housing and of which the resilient gripper fingers, which are separated from each other by slots, are movable in a radial direction by the control surface upon relative axial movement between chuck and housing and at the same time grip the bottles or the like from the outside or release them, characterised in that inside the chuck (5, 5a) is arranged a stationary guide surface (8) for the chuck (5, 5a) or the gripper fingers (7) thereof, so that the chuck or the gripper fingers thereof is or are guided slidingly both on the outside and on the inside thereof.

2. Bell gripper according to claim 1, characterised in that the guide surface (8) is of rotationally symmetrical construction and arranged concentrically with the housing (1) and with the chuck (5, 5a).

3. Bell gripper according to claim 2, characterised in that the guide surface (8) is of cylindrical construction.

4. Bell gripper according to claim 3, characterised in that the inner surface (9) of the housing (1) opposite the guide surface (8) is of cylindrical construction and arranged concentrically with the guide surface (8).

5. Bell gripper according to claim 4, characterised in that the chuck (5, 5a) comprises a cylindrical central region which is held slidably between the guide surface (8) and the inner surface (9) of the housing (1).

6. Bell gripper according to any of claims 1 to 5, characterised in that the guide surface (8) extends as far as the end region of the control surface (3) on the inside of the housing.

7. Bell gripper according to any of claims 1 to 6, characterised in that the control surface (3) is concavely rounded, and the ends of the gripper fingers (7) are convexly curved accordingly.

8. Bell gripper according to any of claims 1 to 7, characterised in that the guide surface (8) is arranged on a bridge (10) mounted in the housing (1) between the controlling element (4) and the receiving opening (2).

9. Bell gripper according to claim 8, characterised in that the bridge (10) is provided with several radially oriented webs (11) which pass through axially extending openings (6) in the chuck (5, 5a) into a recess (12) of the housing (1).

10. Bell gripper according to claim 9, characterised in that the openings are formed by the open-edged slots (6) between the gripper fingers (7).

11. Bell gripper according to claim 9 or 10, characterised in that the housing (1) is divided in the region of the recess (12) in a plane located perpendicularly to the centre axis, and the two housing portions (1a, 1b) are releasably connected to each other.

12. Bell gripper according to any of claims 8 to 11, characterised in that the bridge (10) on the side facing towards the receiving opening (2) comprises an annular attachment (13) of which the interior is constructed as a receptacle for a bottle head.

13. Bell gripper according to claim 12, characterised in that the diameter of the receptacle more or less corresponds to the diameter of the receiving opening (2) and is located concentrically with the latter.

14. Bell gripper according to claim 12 or 13, characterised in that the gripper fingers (7) are provided with a stepped thicker region (14) on the inside of their free ends and in that the thicker regions when the chuck (5) is open form a cylinder surface which is preferably aligned with the receptacle in the attachment (13).

15. Bell gripper according to any of claims 8 to 14, characterised in that a compression spring (15) is inserted between the side of the bridge (10) facing away from the receiving opening (2) and the adjacent side of the piston-like controlling element (4).

16. Bell gripper according to any of claims 1 to 15, characterised in that the chuck (5, 5a) is provided with a plate (16, 16a) at its end adjacent to the controlling element (4).

17. Bell gripper according to claim 16, characterised in that the chuck (5, 5a) and its plate (16, 16a) are constructed in one piece.

18. Bell gripper according to claim 16 or 17, characterised in that the chuck (5) in the region of the plate (16) is releasably connected to the controlling element (4).

19. Bell gripper according to claim 17, characterised in that the piston-like controlling element is formed directly by the plate (16a) of the chuck (5a) and in that on the chuck (5a) and/or the plate (16a) is integrally formed a rotationally symmetrical elastic sealing lip (24) which abuts against the cylindrical inner surface (9) of the housing (1) with initial tension.

20. Bell gripper according to claim 19, characterised in that the sealing lip (24) with its free end points towards the side of the chuck (5a) facing away from the gripper fingers (7).

21. Bell gripper according to claim 20, characterised in that adjoining the sealing lip (24) towards the centre is an annular groove (25) which is formed in the plate (16a) and which is open in an axial direction.

22. Bell gripper according to claim 21, characterised in that the sealing lip (24) extends as far as the plane of the face of the plate (16a) facing away from the gripper fingers (7) or ends shortly before it.

23. Bell gripper according to any of claims 16 to 22, characterised in that in the plate (16a) is embedded a metal reinforcing plate (26).

24. Bell gripper according to any of claims 16 to 23, characterised in that on the side of the plate (16a) facing towards the gripper fingers (7) is formed a centring attachment (27) for a compression spring (15) engaging the plate (16a).

25. Bell gripper according to any of claims 1 to 24, characterised in that the chuck (5, 5a) and if occasion arises its plate (16, 16a) are made of a soft elastic or bendable plastic.

## Revendications

1. Tulipe de préhension de bouteilles ou d'objets analogues, comportant un corps du genre douille qui présente sur un côté un orifice récepteur pour une bouteille ou un objet analogue, auquel fait suite une surface de commande s'élargissant coniquement vers l'intérieur, un élément de manoeuvre monté mobile axialement dans le corps sur l'autre côté et une pince attaquée par cet élément de manoeuvre et montée mobile axialement dans le corps, dont les doigts préhenseurs élastiques, séparés par des fentes, sont, lors d'un mouvement axial relatif entre la pince et le corps, mus radialement par la surface de commande pour saisir de l'extérieur ou libérer les bouteilles ou les objets analogues, caractérisée par le fait qu'à l'intérieur de la pince (5, 5a) est prévue une surface fixe de guidage (8) guidant celle-ci, ou ses doigts préhenseurs (7), de sorte que la pince, ou ses doigts préhenseurs, est guidée, ou sont guidés, en glissement à la fois sur sa ou leur face extérieure et sur sa ou leur face intérieure.

2. Tulipe de préhension selon la revendication 1, caractérisée par le fait que la surface de guidage (8) est à symétrie de révolution et a le même axe que le corps (1) et la pince (5, 5a).

3. Tulipe de préhension selon la revendication 2, caractérisée par le fait que la surface de guidage (8) est cylindrique.

4. Tulipe de préhension selon la revendication 3, caractérisée par le fait que la surface intérieure (9) du corps (1) opposée à la surface de guidage (8) est cylindrique et a le même axe que celle-ci.

5. Tulipe de préhension selon la revendication 4, caractérisée par le fait que la pince (5, 5a) a une partie médiane cylindrique qui est placée glissante entre la surface de guidage (8) et la surface intérieure (9) du corps (1).

6. Tulipe de préhension selon l'une des revendications 1 à 5, caractérisée par le fait que la surface de guidage (8) s'étend jusqu'à la partie extrême intérieure au corps de la surface de commande (3).

7. Tulipe de préhension selon l'une des revendications 1 à 6, caractérisée par le fait que la surface de commande (3) est concave et les extrémités des doigts préhenseurs (7) sont convexes de manière correspondante.

8. Tulipe de préhension selon l'une des revendications 1 à 7, caractérisée par le fait que la surface de guidage (8) est située sur un pont (10) fixé dans le corps (1) entre l'élément de manoeuvre (4) et l'orifice récepteur (2).

9. Tulipe de préhension selon la revendication 8, caractérisée par le fait que le pont (10) est pourvu de plusieurs nervures dirigées radialement (11) qui s'engagent dans un évidement (12) du corps (1) en passant par des ouvertures s'étendant axialement (6) de la pince (5, 5a).

10. Tulipe de préhension selon la revendication 9, caractérisée par le fait que les ouvertures sont formées par les fentes ouvertes au bord (6) entre les doigts préhenseurs (7).

11. Tulipe de préhension selon l'une des revendications 9 et 10, caractérisée par le fait que le corps (1) est divisé dans la zone de l'évidement (12) dans un plan perpendiculaire à l'axe et les deux parties (1a, 1b) du corps sont assemblées de manière démontable.

12. Tulipe de préhension selon l'une des revendications 8 à 11, caractérisée par le fait que le pont (10) présente sur sa face dirigée vers l'orifice récepteur (2) un appendice annulaire (13) dont l'intérieur forme récepteur pour une tête de bouteille.

13. Tulipe de préhension selon la revendication 12, caractérisée par le fait que le récepteur et l'orifice récepteur (2) ont à peu près le même diamètre et ont le même axe.

14. Tulipe de préhension selon l'une des revendications 12 et 13, caractérisée par le fait que les doigts préhenseurs (7) sont pourvus sur le côté intérieur de leur extrémité libre d'un épaississement déporté (14) et que les épaississements forment, lorsque la pince (5) est ouverte, une surface cylindrique qui est de préférence alignée avec le récepteur de l'appendice (13).

15. Tulipe de préhension selon l'une des revendications 8 à 14, caractérisée par le fait qu'un ressort de compression (15) est monté entre la face du pont (10) opposée à l'orifice récepteur (2) et la face voisine de l'élément de manoeuvre du genre piston (4).

16. Tulipe de préhension selon l'une des revendications 1 à 15, caractérisée par le fait que la pince (5, 5a) est, sur son côté frontal voisin de l'élément de manoeuvre (4), pourvue d'un fond (16, 16a).

17. Tulipe de préhension selon la revendication 16, caractérisée par le fait que la pince (5, 5a) et son fond (16, 16a) font corps.

18. Tulipe de préhension selon l'une des revendications 16 et 17, caractérisée par le fait que la pince (5) est, dans la zone du fond (16), jointe de manière démontable à l'élément de manoeuvre (4).

19. Tulipe de préhension selon la revendication 17, caractérisée par le fait que l'élément de manoeuvre du genre piston est formé directement par le fond (16a) de la pince (5a) et que sur la pince (5a) et/ou sur le fond (16a) est faite une lèvre élastique d'étanchéité à symétrie de révolution (24) qui s'apppuie avec une certaine force sur la surface intérieure cylindrique (9) du corps (1).

20. Tulipe de préhension selon la revendication 19, caractérisée par le fait que l'extrémité libre de la lèvre d'étanchéité (24) est dirigée vers le côté de la pince (5a) opposé aux doigts préhenseurs (7).

21. Tulipe de préhension selon la revendication 20, caractérisée par le fait qu'à la lèvre d'étanchéité (24) fait suite, vers le milieu, une gorge annulaire (25) faite dans le fond (16a) et ouverte dans la direction axiale.

22. Tulipe de préhension selon la revendication 21, caractérisée par le fait que la lèvre d'étanchéité (24) s'étend jusqu'au plan de la face frontale du fond (16a) opposée aux doigts préhenseurs (7) ou se termine peu avant le fond.

23. Tulipe de préhension selon l'une des revendications 16 à 22, caractérisée par le fait que dans le fond (16a) est noyée une plaque métallique de renfort (26).

24. Tulipe de préhension selon l'une des revendications 16 à 23, caractérisée par le fait que sur la face du fond (16a) dirigée vers les doigts préhenseurs (7) est fait un appendice de centrage (27) pour un ressort de compression (15) agissant sur le fond (16a).

25. Tulipe de préhension selon l'une des revendications 1 à 24, caractérisée par le fait que la pince (5, 5a) et éventuellement son fond (16, 16a) sont faits d'un plastique élastique souple ou facilement flexible.
